# DEMANDE DE BREVET EUROPEEN

(11) **EP 1 167 076 A1**
(43) Date de publication de la demande: **02.01.2002**
(21) Numéro de dépôt: 01401588.7
(22) Date de dépôt: 18.06.2001
(51) Int. Cl.: B60B 3/04, B21D 53/26

(54) **Voile de roue allégé et à large espace frein**

(30) Priorité: 30.06.2000 FR 0008456
(71) Demandeur: USINOR, 92800 Puteaux (FR)
(72) Inventeur: Marron, Guy, 13730 Saint Victoret (FR); Sobroggio, Alain, 13740 Le Rove (FR)
(74) Mandataire: Lagrange, Jacques Etienne

(57) **Abrégé**

Procédé de réalisation d'une roue (1) de véhicule terrestre à moteur comportant de manière générale, un voile (2) de roue et une jante (3) sensiblement cylindrique, le voile (2) de roue étant obtenu à partir d'un flan (4) de tôle d'épaisseur déterminée soumis notamment à plusieurs opérations de mise en forme, et constitué, d'une partie centrale (5) sensiblement plane comportant une portée qui sert à centrer et à fixer la roue sur le moyeu de l'essieu du véhicule, une montée intérieure (7) sensiblement conique, une autre partie conique inversée définissant, avec la montée intérieure, un nez de galbe (9) qui présente un rayon de courbure important, la partie conique inversée (8) se terminant par un bord tombé destiné à la liaison du voile avec la jante, procédé caractérisé en ce que lors de l'opération de mise en forme du bord tombé, on lamine la tôle de façon à conserver ou réduire l'épaisseur de la tôle de base.

## Description

La présente invention concerne un procédé de réalisation d'une roue de véhicule terrestre à moteur.

Dans le domaine de la réalisation de roues de véhicules automobiles, les constructeurs cherchent à alléger les véhicules et pour cela cherchent à alléger, individuellement, tous les composants du véhicule automobile. Les fabricants de roues se doivent donc d'optimiser le poids des roues, d'autant plus qu'il s'agit d'un organe moteur non suspendu. Les constructeurs automobiles, pour des questions de sécurité, s'orientent vers une augmentation de la puissance de freinage des véhicules, ce qui nécessite une dimension du diamètre des freins de plus en plus importante, il est donc important qu'à une dimension de roue déterminée la place disponible à l'intérieur du voile de roue soit la plus importante possible.

Une roue pour véhicule terrestre à moteur comporte de manière générale, un voile de roue et une jante sensiblement cylindrique. Le voile de roue est constitué, d'une partie centrale sensiblement plane comportant une portée qui sert à centrer et à fixer la roue sur le moyeu de l'essieu du véhicule, une montée intérieure sensiblement conique, une autre partie conique inversée définissant, avec la montée intérieure, un nez de galbe qui présente un rayon de courbure important, la partie conique inversée se terminant par un bord tombé destiné à la liaison du voile avec la jante.

Les éléments d'une roue de véhicule terrestre à moteur sont généralement obtenus par emboutissage à partir d'un flan de tôle en une ou plusieurs parties pouvant être raboutées, par exemple par LASER.

Les différentes opérations de formage donnent en final, un profil du voile de roue généralement constitué de cinq zones circulaires concentriques, qui sont :
- la partie centrale qui sert à fixer la roue sur le moyeu de l'essieu du véhicule,
- la montée intérieure sensiblement conique reliant la portée de la partie centrale et le sommet de la roue appelé nez de galbe,
- le nez de galbe qui présente un rayon de courbure important,
- la zone arrière du nez de galbe, partie conique inversée, sur laquelle se situent des trous d'allégement,
- le bord tombé par lequel est généralement réalisée la liaison du voile de roue avec la jante.

Un procédé classique de réalisation d'un voile de roue est généralement composé de 8 passes qui se découpe en 4 familles :
- 1 passe de découpe flan
- 2 à 3 passes de formage
- 1 passe de découpe de la périphérie de l'embouti
- 1 passe de tombage bord
et plusieurs passes de découpe notamment par exemple d'alvéoles, de trous de fixation et des opérations de calibrage.

Le flan est souvent constitué d'une tôle d'épaisseur constante. Les procédés d'emboutissage modifient les épaisseurs et entraînent des amincissements localisés ainsi que des épaississements en fonction des zones étirées ou en rétreint. L'opération de tombé de bord entraîne invariablement un épaississement fort sur la périphérie du voile, ceci est dû au mode de déformation en rétreint. Cet épaississement est continu le long du tombé de bord. Il est classiquement de 14% en moyenne.

Le bord tombé du voile sert à assurer un appui pour la liaison entre voile et jante. Il est également le siège de la liaison soudée entre voile et jante. Le joint soudé est traditionnellement de type cordon, plus rarement par point par soudage laser.

La liaison entre le voile et la jante est donc constituée d'une portion de jante et de voile qui se recouvre. Cette zone est donc surdimensionnée de part l'épaississement induit par l'emboutissage du voile et par le recouvrement du bord tombé sur la jante.
Les inconvénients de ce type de roue classique sont :
- une masse du disque relativement élevée,
- un espace disponible pour les freins à l'intérieur du voile de roue limité en dimensions.

Le but de l'invention est d'alléger la roue en particulier le voile de roue, et d'augmenter l'espace disponible à l'intérieur du voile pour un diamètre extérieur fixé. L'invention a également pour but de dimensionner au juste nécessaire les diverses zones de la roue tout en conservant une nuance d'acier unique pour tout le flan et une épaisseur initiale du flan constante.

L'invention a pour objet un procédé de réalisation d'une roue de véhicule terrestre à moteur comportant, de manière générale, un voile de roue et une jante sensiblement cylindrique, le voile de roue étant obtenu à partir d'un flan de tôle d'épaisseur déterminée soumis notamment à plusieurs opérations de mise en forme, et constitué, d'une partie centrale sensiblement plane comportant une portée qui sert à centrer et à fixer la roue sur le moyeu de l'essieu du véhicule, une montée intérieure sensiblement conique, une autre partie conique inversée définissant, avec la montée intérieure, un nez de galbe qui présente un rayon de courbure important, la partie conique inversée se terminant par un bord tombé destiné à la liaison du voile avec la jante, procédé caractérisé en ce que lors de l'opération de mise en forme du bord tombé, on lamine la tôle de façon à conserver ou réduire l'épaisseur de la tôle de base.

Les autres caractéristiques de l'invention sont :
- on lamine la tôle par emboutissage,
- on découpe préalablement la périphérie du voile à un diamètre réduit de façon à tenir compte de la surlongueur induite par l'opération de laminage, lors de l'opération de mise en forme du bord tombé.

L'invention concerne également un dispositif d'emboutissage pour voile de roue de véhicule terrestre à moteur, le voile de roue étant obtenu à partir d'un flan de tôle d'épaisseur déterminée soumis notamment à plusieurs opérations de mise en forme, le voile étant constitué, d'une partie centrale sensiblement plane comportant une portée qui sert à centrer et à fixer la roue sur le moyeu de l'essieu du véhicule, une montée intérieure sensiblement conique, une autre partie conique inversée définissant, avec la montée intérieure, un nez de galbe qui présente un rayon de courbure important, la partie conique inversée se terminant par un bord tombé destiné à la liaison du voile avec la jante, caractérisé en ce que le dispositif d'emboutissage comporte un outil composé d'une matrice sensiblement cylindrique et ayant, en section axiale, le profil de la partie centrale plane, de la montée intérieure conique et de la partie conique inversée, un serre flan cylindrique ayant, en section axiale, la forme complémentaire de la matrice et un poinçon lamineur composé notamment d'une couronne coaxiale à la matrice et au serre flan et dont la surface intérieure présente une partie conique de laminage.

Les autres caractéristiques de l'invention sont :
- la partie conique de l'outil de laminage a un angle d'ouverture compris entre 10° et 40° et de préférence 30°,
- la partie conique de l'outil de laminage comporte un rayon d'entrée dans la matrice compris entre 8 mm et 20 mm et de préférence 12 mm,
- la partie conique de l'outil de laminage comporte un rayon de fin de matrice compris entre 2 mm et 20 mm de préférence 5 mm,
- l'outil comporte en surface une couche durcissante choisi parmi le TiN, le CrN, le carbone IC, le carbone amorphe ou tout autre revêtement près à améliorer les conditions de laminage.
- la surface de l'outil comporte une rugosité Ra comprise entre 0,2 et 0,5*µ*m et de préférence entre 0,3 et 0,4*µ*m.

L'invention concerne aussi une roue de véhicule terrestre à moteur qui se caractérise en ce qu'elle comporte un voile dont le bord tombé embouti comporte une épaisseur égale ou inférieure à l'épaisseur de la tôle de base.

La description qui suit et les figures annexées le tout donné à titre d'exemple non limitatif feront bien comprendre l'invention.

La figure 1 est une représentation générale d'une roue de véhicule automobile selon l'invention.

Les figures 2a, 2b, 2c, 2d présentent une suite d'opération nécessaire à la réalisation d'une roue selon l'invention.

Les figures 3a et 3b sont deux coupes axiales de deux voiles de roue respectivement classiques et selon l'invention.

La figure 4 est un schéma de principe de la mise en forme du voile de roue selon l'invention, sur l'outil d'emboutissage selon l'invention.

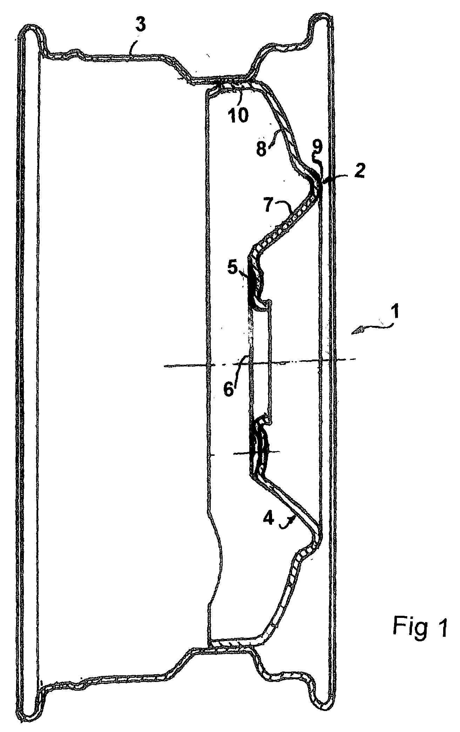

Le procédé selon l'invention concerne la réalisation d'une roue 1 de véhicule terrestre à moteur, comme représenté sur la figure 1, comportant de manière générale, un voile 2 de roue et une jante 3 sensiblement cylindrique, le voile 2 de roue étant obtenu à partir d'un flan 4 de tôle d'épaisseur déterminée soumis notamment à plusieurs opérations de mise en forme, et constitué, d'une partie centrale 5 sensiblement plane comportant une portée 6 qui sert à centrer et à fixer la roue 1 sur le moyeu de l'essieu du véhicule, une montée intérieure 7 sensiblement conique, une autre partie conique inversée 8 définissant, avec la montée intérieure 7, un nez de galbe 9 qui présente un rayon de courbure important, la partie conique inversée 8 se terminant par un bord tombé 10 destiné à la liaison du voile 2 avec la jante 3. Selon l'invention, lors de l'opération de mise en forme du bord tombé 10, on lamine le flan 4 de tôle sur toute la périphérie du voile 2 de façon à conserver l'épaisseur de la tôle si celle-ci est optimisée ou encore de réduire l'épaisseur de la tôle de base en fonction de l'optimisation en caractéristiques mécaniques de ladite roue 1.

Le problème résolu est notamment de dimensionner et mettre l'épaisseur juste nécessaire sur le tombé de bord. Une réduction d'épaisseur sur cette zone permet en effet d'augmenter le diamètre intérieur du voile.

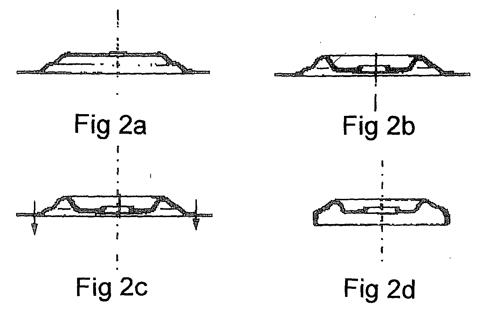

Un avantage de la solution proposée est de diminuer l'épaisseur du voile de roue dans la zone du bord tombé. Cette diminution d'épaisseur est réalisée lors de l'opération de tombé de bord, incluse dans la gamme d'emboutissage comme représentée sur les figures 2a, 2b, 2c, 2d. L'opération consiste à effectuer un laminage du flan de tôle lors de l'opération du tombé de bord.

Les premières opérations d'emboutissage schématisées sur les figures 2a, 2b, 2c sont classiques. La figure 2a présente une première opération d'emboutissage pour la mise en forme de la montée intérieure 7, la figue 2b présente une deuxième opération d'emboutissage pour la mise en forme de la partie conique inversée 8, la figure 2c matérialise une opération de découpe périphérique du voile de roue, avant emboutissage du bord tombé 10, la figure 2d présente le voile de roue après réalisation du bord tombé 10. A la fin de l'opération de laminage du bord tombé 10, est effectuée la découpe du pourtour du flan. Le diamètre de découpe peut être réduit pour tenir compte de la surlongueur induite par l'opération de laminage.

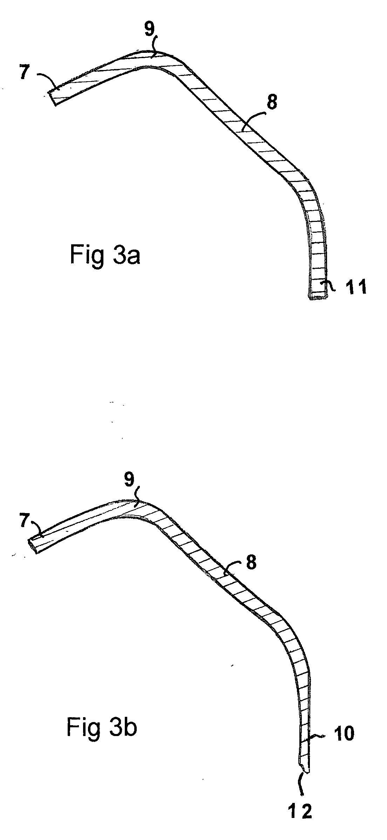

La figure 3a donne une image d'une partie de roue de véhicule en coupe axiale réalisée de manière classique et la figure 3b donne une image de la même partie de roue réalisée selon l'invention. Dans le cas d'une mise en forme de manière classique, la partie 11 du flan de tôle destinée à la réalisation du bord tombé est soumis à rétreint ce qui entraîne obligatoirement une augmentation de l'épaisseur du flan de tôle. Selon l'invention la mise en forme par laminage de la partie du flan de tôle destinée à la réalisation du bord tombé 10 est soumis à un étirage forcé générant un allongement de la partie mise en forme, l'étirage pouvant soit conserver l'épaisseur du flan de tôle de base, soit en fonction du besoin, réduire l'épaisseur du flan de tôle de manière constante ou progressive.

Dans cette même opération de laminage, le bord final 12 de la périphérie de la partie laminée peut être en biseau au lieu d'être droit.

Le laminage de la partie du flan destiné au bord tombé peut être réalisé avec ou sans feston, tout dépend du diamètre de découpe choisi qui fait suite à l'opération de laminage du bord tombé. La présence de feston n'est pas rédhibitoire. On note que cette technique demande une puissance presse supérieure à celle utilisée pour l'opération classique de tombé de bord.

Selon l'invention, l'opération de laminage, lors du tombé de bord, nécessite un outillage adapté.

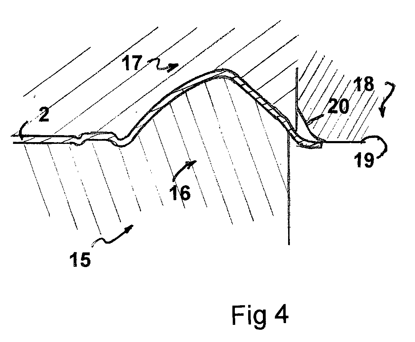

Comme représenté sur la figure 4, l'outil 15 du dispositif d'emboutissage pour voile 2 de roue de véhicule terrestre à moteur est constitué d'une matrice 16 sensiblement cylindrique comportant, en section axiale, le profil du voile, à savoir, le profil de la partie centrale sensiblement plane, de la montée intérieure sensiblement conique et de la partie conique, un serre flan 17 cylindrique ayant, en section axiale, la forme complémentaire de la matrice 16 et un poinçon lamineur 18 composé notamment d'une couronne 19 coaxiale à la matrice 16 et au serre flan 17 et dont la surface intérieure présente une partie conique 20 de laminage.
- la partie conique de l'outil de laminage a un angle d'ouverture compris entre 10° et 40° et de préférence 30°,
- la partie conique de l'outil de laminage comporte un rayon d'entrée dans la matrice compris entre 8mm et 20 mm et de préférence 12 mm,
- la partie conique de l'outil de laminage comporte un rayon de fin de matrice compris entre 2 mm et 20 mm de préférence 5 mm,
- l'outil comporte en surface une couche durcissante choisi parmi le TiN, le CrN, le carbone IC, le carbone amorphe ou tout autre revêtement après à améliorer les conditions de laminage,
- la surface de l'outil comporte une rugosité Ra comprise entre 0,2 et 0,5 *µ*m et de préférence entre 0,3 et 0,4*µ*m.

La géométrie de l'outil 15 est adaptée à l'opération de laminage ainsi qu'à la diminution d'épaisseur que l'on souhaite obtenir. L'épaisseur finale du tombé de bord est directement lié à l'entrefer entre le poinçon 18 et la matrice 16.

En effet, le dimensionnement de l'outil 15 doit pouvoir supporter des efforts importants, doit également résister à des efforts de frottement.

Dans un exemple d'application le poinçon lamineur 18 se présente comme un cône femelle avec un angle d'ouverture 21 de 30°, un rayon d'entrée de matrice 22 de 15 mm et un rayon de fin matrice 23, rayon de laminage, de 20 mm.

Le revêtement de l'outil 15 est important. Il conditionne la valeur d'effort poinçon, d'efforts latéraux, de dévêtissage et également induit ou non le phénomène d'usure et grippage.

Un revêtement de type TiN, CrN, le carbone IC ou le carbone amorphe est conseillé.

La rugosité doit être importante pour permettre un meilleur piégeage de l'huile. Un Ra de l'ordre de 0,3 *µ*m ou 0,4 *µ*m dans l'exemple semble optimum.

Selon le procédé de mise en forme utilisé, il peut être nécessaire d'effectuer une opération complémentaire de découpe circulaire. Cette découpe peut être également mise à profit pour échancrer le tombé de bord dans les zones qui ne serviront pas à la liaison soudée du voile avec la jante.

L'allégement réalisé sur la roue selon l'invention atteint en final environ 0,3 kg pour un voile de roue de 15 pouces.

Des variantes de réalisation se situent au niveau de la position de la découpe, dans le procédé de réalisation de la roue, pour mettre à longueur le bord tombé. Cette découpe peut être effectuée avant l'opération de tombé de bord ou en final avec utilisation d'une découpe par came si elle est faite sur la ligne de presse ou par reprise à l'outil à tronçonner.

## Revendications

1. Procédé de réalisation d'une roue de véhicule terrestre à moteur comportant de manière générale, un voile de roue et une jante sensiblement cylindrique, le voile de roue étant obtenu à partir d'un flan de tôle d'épaisseur déterminée soumis notamment à plusieurs opérations de mise en forme, et constitué, d'une partie centrale sensiblement plane comportant une portée qui sert à centrer et à fixer la roue sur le moyeu de l'essieu du véhicule, une montée intérieure sensiblement conique, une autre partie conique inversée définissant, avec la montée intérieure, un nez de galbe qui présente un rayon de courbure important, la partie conique inversée se terminant par un bord tombé destiné à la liaison du voile avec la jante, procédé **caractérisé en ce que** lors de l'opération de mise en forme du bord tombé, on lamine la tôle de façon à conserver ou réduire l'épaisseur de la tôle de base.

2. Procédé selon la revendication 1 **caractérisé en ce qu'**on lamine la tôle par emboutissage.

3. Procédé selon la revendication 1 **caractérisé en ce qu'**on découpe préalablement la périphérie du voile à un diamètre réduit de façon à tenir compte de la surlongueur induite par l'opération de laminage, lors de l'opération de mise en forme du bord tombé.

4. Dispositif d'emboutissage pour voile de roue de véhicule terrestre à moteur, le voile de roue étant obtenu à partir d'un flan de tôle d'épaisseur déterminée soumis notamment à plusieurs opérations de mise en forme, le voile étant constitué, d'une partie centrale sensiblement plane comportant une portée qui sert à centrer et à fixer la roue sur le moyeu de l'essieu du véhicule, une montée intérieure sensiblement conique, une autre partie conique inversée définissant, avec la montée intérieure, un nez de galbe qui présente un rayon de courbure important, la partie conique inversée se terminant par un bord tombé destiné à la liaison du voile avec la jante, **caractérisé en ce que** le dispositif d'emboutissage comporte un outil composé, d'une matrice sensiblement cylindrique et ayant, en section axiale, le profil de la partie centrale plane, de la montée intérieure conique et de la partie conique inversée, un serre flan cylindrique ayant, en section axiale, la forme complémentaire de la matrice et un poinçon lamineur, composé notamment d'une couronne coaxiale à la matrice et au serre flan et dont la surface intérieure présente une partie conique de laminage.

5. Dispositif selon la revendication 4 **caractérisé en ce que** la partie conique de l'outil de laminage a un angle d'ouverture compris entre 10° et 40° et de préférence 30°.

6. Dispositif selon la revendication 4 **caractérisé en ce que** la partie conique de l'outil de laminage comporte un rayon d'entrée dans la matrice compris entre 8 mm et 20 mm et de préférence 12 mm.

7. Dispositif selon la revendication 4 **caractérisé en ce que** la partie conique de l'outil de laminage comporte un rayon de fin de matrice compris entre 2 mm et 20 mm et de préférence 5 mm.

8. Dispositif selon la revendication 4 **caractérisé en ce que** l'outil comporte en surface une couche durcissante choisi parmi le TiN, le CrN, le carbone IC, le carbone amorphe.

9. Dispositif selon la revendication 4 **caractérisé en ce que** la surface de l'outil comporte une rugosité Ra comprise entre 0,2 et 0,5.*µ*m et de préférence entre 0,3 et 0,4 *µ*m.

10. Roue de véhicule terrestre à moteur **caractérisée en ce qu'**elle comporte un voile dont le bord tombé embouti comporte une épaisseur égale ou inférieure à l'épaisseur de la tôle de base.
